# EUROPEAN PATENT APPLICATION

(11) **EP 4 336 390 A1**
(43) Date of publication of application: **13.03.2024**
(21) Application number: 22195205.4
(22) Date of filing: 12.09.2022
(51) Int. Cl.: G06F 21/16, G10L 19/018, H04N 21/8358

(54) **METHOD FOR TRACKING CONTENT IN A USER DATA SIGNAL**

(71) Applicant: Cugate AG, 10823 Berlin (DE)
(72) Inventor: RHEIN, Hanspeter, 30916 Isernhagen (DE)
(74) Representative: Eisenführ Speiser

(57) **Abstract**

The invention refers to a method for tracking content in a signal, in particular an audio and/or video signal. A user signal is provided, wherein the user signal is defined by an evolution of a spectrum with time over a plurality of time frames representing a content, in particular, a visual and/or audio content. A presence of a content in the user signal in a time frame is determined based on a watermark associated with the content embedded in the user data signal and/or based on determining one or more characteristics of the content associated with a footprint of the predetermined content in the user data signal. A determined presence of the content in the user data signal in a time frame is stored on a database in association with an identification of the content. The predetermined content is tracked in the user data signal based on the database.

## Description

### FIELD OF THE INVENTION

The invention relates to a computer implemented method, an apparatus and a computer program product for tracking content in a user data signal. Moreover, the invention refers to a computer implemented method, an apparatus and a computer program product for determining a presence of content for tracking the content in the user data signal. Moreover, the invention refers to a user device for determining a presence of content for tracking content in a user data signal and a database that can be utilized in the above-mentioned methods, apparatuses and computer program products.

### BACKGROUND OF THE INVENTION

Today, a wide variety of platforms exists at which users can be provided, in particular, with visual and/or audio content, like movies, music pieces, games, etc. Due to this wide variety of platforms, it becomes difficult and in some cases even nearly impossible to track when and where a specific content, for example, a movie, has been consumed by a user. This tracking, however, can be essential, for instance, for the creators or right owners, of the respective content for enforcing the rights with respect to the content. Moreover, even if a tracking can be provided that allows to determine when and where a respective content has been consumed by a user or in other ways presented to a user, it is not only important that this tracking is accurate, but also free of malicious manipulations, i.e. the data security of the tracking is of uttermost importance. Thus, it would be advantageous if the presentation of a predetermined content to a user could be tracked accurately while at the same time preventing malicious manipulation of the tracking data.

### SUMMARY OF THE INVENTION

It is an object of the present invention to provide a computer implemented method, an apparatus and a computer program product that allow to accurately track content presented to a user while preventing malicious manipulation of the tracking data.

In a first aspect of the invention, a computer implemented method for tracking content in a user data signal, in particular, an audio and/or video data signal, is presented, wherein the method comprises a) providing a user data signal, wherein the user data signal is defined by an evolution of a spectrum with time over a plurality of time frames representing a content, in particular, a visual and/or audio content, to be presented to a user, b) determining a presence or absence of a predetermined content in the user data signal in a time frame of the plurality of time frames based on a watermark associated with the predetermined content embedded in the user data signal and/or based on determining one or more characteristics of the predetermined content associated with a footprint of the predetermined content in the user data signal, c) storing a determined presence of the predetermined content in the user data signal in a time frame on a database in association with an identification of the predetermined content, and d) tracking the predetermined content in the user data signal based on the database..

Since the present invention utilizes watermarks and/or footprints for determining a presence or absence of a predetermined content in a user data signal, the presence or absence of the content in the user data signal can be determined very accurately with reasonable computational resources. Moreover, since the detected presence of the predetermined content in the user data signal is stored on a database associated with an identification of the predetermined content and since the content in the user data signal is then tracked based on the database, the database can be secured in such a way that a malicious manipulation of the database is prevented, for example, by utilizing respective security measures for protecting the database. Thus, the method allows for accurately tracking the presentation of a content to a user while at the same time allowing to protect the tracking from malicious manipulations.

Generally, the computer implemented method can be performed by any hardware and/or software and on any general or dedicated computer. For example, the computer implemented method can be performed by a computer or a network of computers comprising one or more processors by running a respective computer program. Preferably, the computer implemented method is performed in a distributed computing utilizing at least two locally distinguishable computing devices. For example, it can be advantageous that some of the functions of the method, i.e. some of the steps of the method, are performed on different computing devices. However, in other embodiments the steps can also be performed on only one computing device.

Generally, the computer implemented method is configured for tracking an object in a user data signal, in particular, in an audio and/or video data signal. A user data signal can generally be understood as a data signal that is provided to any kind of user device, e.g. a user interface, which provides the content of the user data signal to the user. Thus, a user data signal can be provided in any analogue or digital format, coding or data structure that is readable by the respective user device, i.e. user terminal. Preferably, the user data signal is an audio and/or video data signal and thus encodes audio and/or video content to be presented to a user. However, the user data signal can also refer to any other visual and/or audio content, for instance, to image content, etc.

In a first step of the method, a user data signal is provided. Generally, the providing of the user data signal can refer, for instance, to receiving the user data signal from an apparatus generating the user data signal, for instance, a camera or microphone, and providing the same for further processing. However, the providing of the user data signal can also refer to accessing a long-term or short-term storage on which the user data signal is already stored and providing the accessed user data signal for further processing. Furthermore, the providing can also refer to a generating of a user data signal, wherein, for instance, the providing can then be performed by a unit generating the user data signal, for instance, a camera or microphone, wherein the generated user data signal is then provided for further processing.

A user data signal can refer to any signal that represents content intended eventually for reception by a user, in particular a human user. Preferred examples of a user data signal are an audio signal, representing the evolution of a spectrum of frequencies for acoustic waves over time, e.g. the spectrum ranging for example from 300 Hz to 3400 Hz for telephony or from 10 Hz to 20 kHz for high quality reproduction of a classical concert, or a video signal referring to single as well as moving images, where a frequency of the useful signal is, for example, for displaying on a TV or cinema screen, defined by the image properties and lies between 0 Hz, e.g. an empty image, and a maximum frequency determined by the rows and columns of the screen and a refresh rate for moving images, e.g. 6.5 MHz for many TV-systems. However, user data signals can also include signals representing text strings or other representations of content and also future developments of such signals intended directly or indirectly in particular for human perception. Thus, as shown by the examples provided above, the user data signal can be defined by an evolution of a spectrum with time over a plurality of time frames representing a content to be presented to a user. The time frames can be defined by the data structure itself, for instance, as the individual images in a video signal, wherein in this case a time frame can refer to the time in which one of the individual images is presented on a screen to a user or to a music track from the beginning of the music track to the end of the music track. However, a time frame can also be arbitrarily defined, for instance, can be user defined, independent of the structure of the user data signal, for example, by defining in a video signal a time frame by the number of images shown to a user during this time frame, by the amount of data presented to the user, or simply by defining a certain time period in which the data content is presented to the user. For example, for an audio signal representing audio content the audio content can be divided into a plurality of time frames each with a length of, preferably, 30 seconds. The time frames can be defined as subsequent time frames so that time frames do not overlap. However, it can also be advantageous to defined times frames with at least some overlap.

User data signals can be represented in an analogous way, for example as radio or TV signals, or might be represented as digital signals, for example PCM-signals formed by sampling an analogous signal with subsequent quantizing and perhaps coding steps. In any case a user data signal is meant to include a complete representation of the relevant data set representing the content to be provided to the user, be it a single piece of music or a set of such tracks, a single image or a complete movie.

Further, in a next step, a presence or absence of a predetermined content in the user data signal in a time frame of the plurality of time frames is determined based on a watermark associated with the predetermined content embedded in the user data stream. Generally, the embedded watermark is an embedded data sequence that uniquely identifies the presence of the predetermined content in the user data signal in a time frame. However, the embedded watermark data sequence can also provide further information with respect to the presence of a predetermined content. In particular, the embedded watermark data sequence can comprise a unique identifier of the predetermined content, but also further characteristics of the content like a name of a person, commercial data, like an owner of a piece of music, or the producer of a product, or technical information, like technical details, for instance, a serial number or DIN norm of a machine, information for the decoding of certain information related to the content, etc. Preferably, the watermark data sequence encodes a storage location on which further information with respect to the predetermined content is stored and/or information for accessing the information, for instance, a key or password. This allows to easily and securely access the respective information, in particular, if the additional information can not be provided in the watermark itself.

Generally, each watermark method for embedding a watermark data sequence into a user data signal can be utilized. In a preferred embodiment, the unique data sequence of the watermark includes a sequence of first and second data states, wherein for embedding a first state of the watermark in the user data signal the ratio of a first spectral amplitude of the user data signal at a first embedding frequency to a second spectral amplitude of the user data signal at a second embedding frequency is established to be higher or equal to a first value of a threshold parameter, and for embedding the second state of the watermark in the user data signal the ratio of the second spectral amplitude of the user data signal at the second embedding frequency to the first spectral amplitude of the user data signal at a first imprinting frequency is established to be higher or equal to a second value of the threshold parameter. Utilizing this method has the advantage that malicious modifications of the watermark and the user data signal can be prevented. Details of this method can be found, for instance, in the patent application EP 1684265 A1.

Generally, the presence or absence of more than one predetermined content to be presented to a user in a time frame can be determined. In this case, for each of the predetermined contents a different unique data sequence as watermark data sequence is embedded into the user data signal for time frames for which the respective content is present. For determining the presence or absence of content known computational algorithms that allow for a decoding of the watermark data sequence, in particular, for the determining of the presence of a specific watermark data sequence in the user data signal, can be utilized.

Additionally or alternatively, the presence or absence of a predetermined content can be determined utilizing one or more characteristics of the predetermined content associated with a footprint of the predetermined content in the user data signal. Generally, a footprint can refer to one or more characteristics of the predetermined content that allow to uniquely identify the predetermined content. These characteristics can then be utilized for comparing the characteristics, i.e. the footprint of the predetermined content, with characteristics determined from the user data signal, wherein if the comparison results in the one or more characteristics determined for the content from the user data stream being within predetermined limits of the one or more characteristics of the footprint, the presence of the content in the user data signal can be determined. Preferably, the footprint, in particular, the characteristics of the predetermined content, is selected such that the comparison between the footprint and the one or more characteristics of the user data signal can be performed in a computational resource effective way, wherein it is further preferred that the footprint of the predetermined content is robust against modifications of the user data signal. Thus, in a preferred embodiment the determining of the characteristics of the data content associated with a footprint of the data content comprises determining as characteristics a footprint vector by a) utilizing frequency filters for processing a frequency spectrum of the user data signal in a time frame comprising a plurality of time sets, wherein each of the frequency filters is adapted to filter a predetermined frequency from the frequency spectrum of the user data signal in each time set, resulting in a set of frequencies, and b) selecting the frequencies with the highest amplitude for each of the time sets and calculating the footprint vector as representing the number of occurrences of different frequencies in the time frame.. Further details on this preferred footprint method can be found, for instance, in the patent EP 1 684 263 A1.

Generally, the predetermined content is a part of the data content to be presented to a user. The content can be understood as referring to information in the user data signal that represents at least a part of the same entity, i.e. the same visual or audio entity. For example, the content can refer to at least a part of a visual entity in a video, like a person in the video, a face of a person in the video, an animal in the video, an inanimate object in a video, etc. Moreover, the content can also refer to the complete movie, a movie clip, a part of a movie, a TV-series, etc. However, the content can also refer to at least a part of an audio entity in an audio signal, for instance, to a music piece, a part of a music piece, a music track, a voice belonging to a predetermined person, one or more sentences of a speech, etc. Thus, the object can generally be defined by a user or operator, for instance, by defining a commonality of respective content to define the data entity forming the content. In the example of a voice, the commonality is that the audio signals of the voice are generated by the same person, wherein the commonality of a person in a video is that all images of the person in the video, although they might be quite different to each other, for instance, if the person is moving, are also generated by the same person. In case of a complete movie or piece of music the commonality is the belonging of the content to this movie or piece of music. However, the commonality can also refer to any other clearly definable feature independent of the commonality being a person, for example, the commonality can also be an animal generating the content, a real or virtual object generating the content, an affiliation of one or more persons or objects generating the content belonging to a certain group, etc.

A determined presence of the predetermined content in the user data signal in a time frame is then stored on a database in association with the identification of the predetermined content. Thus, the database is generated and amended with respect to each determined presence of the predetermined content. The determined presence can be stored in the database, for example, by simply providing a counter for the determined presence that is amended with each determined presence of the predetermined content. However, also additional information with respect to the determined presence can be stored on the database, for instance, information related to the user data signal and in particular to senders and receivers of the user data signal, time, at which the user data signal comprising the predetermined content has been sent or received, etc. In a preferred embodiment, the tracking of the data content based on the database comprises deriving measures for the predetermined content indicative of the time duration of the presence of the data content in the user data signal and/or of how often the predetermined content is present in a user data signal from the database. A measure indicative of a time duration of the presence of the data content in the user data signal can, for example, refer to providing a counter indicating in how many subsequent time frames the content has been determined as being present. However, the measure can also directly refer to a time measure for which the content was present. An example for a measure that is indicative of how often the predetermined content is presented in a user data signal can also refer to a simple count counting time frames indicating how often the content is presented to a user, for instance, how often a movie or piece of music has been consumed by the user.

In a further step, the predetermined content in the user data signal is then tracked placed on the database, for instance, based on the entries in the database referring to a determined presence of the predetermined content, at least the amount and/or frequency of the consuming of the predetermined content can be determined. If further information is added and stored on the database, further, it can be tracked when and where a respective predetermined content is presented to a user, i.e. provided in form of the user data signal.

In a preferred embodiment, the database is a sequential distributed database. In this context a sequentially distributed database refers to a database on which entries can only be stored and accessed in a sequential order, wherein the storage of the entries is distributed to different networked computers which communicate and coordinate the access to the database. Preferably the sequential distributed database further comprises at least one of the following characteristics append only, immutable, temper evident and temper resistant. In this context, append only refers to a characteristic of the database that new data can be appended to the storage but the existent data is immutable, i.e. cannot be modified after is created. Generally, it is preferred that the sequential distributed database is itself immutable and thus does not allow a changing of data after its creation. Furthermore, it is preferred that the sequential distributed database is temper evident and thus makes it easy to detect if data stored on the database has been accessed or manipulated, for instance, by unauthorized parties. Moreover, it is preferred that the database is temper resistant, i.e. is resistant to manipulations by unauthorized parties. In particular, a plurality of database technologies exist that allow to provide these preferred characteristics. Preferably the sequential distributed database refers to a blockchain database, for example, provided in form of a smart contract. These characteristics of the database allow to save the tracking of the predetermined content in a secure, easily controllable and trustable environment that prevents malicious manipulations while at the same time allowing access to the database from a plurality of sources. This is in particular advantageous in contrast to centralized or centrally managed databases that can for security reasons often only be accessed by a predetermined party making the tracking of the predetermined content in a plurality of sources that can belong to many different parties difficult and computational resource intensive. Thus, utilizing sequentially distributed databases, in particular, blockchain databases, the database can be managed in a distributed manner without being vulnerable to malicious manipulations.

In a further aspect of the invention, a computer implemented method for determining a presents of content for tracking content in a user data signal, in particular an audio and/or video data signal, is presented, wherein the method comprises a) providing a user data signal, wherein the user data signal is defined by an evolution of a spectrum with time over a plurality of time frames representing content, on particular a visual and/or audio content, to be presented to a user, b) determining a presence or absence of a predetermined content in the user data signal in a time frame of the plurality of time frames based on a watermark associated with the predetermine content embedded in the user data signal and/or based on determining one or more characteristics of the predetermined content associated with a footprint of the data content in the user data signal, and c) sending the detected presence of the predetermined content in the user data signal to a database in association with an identification of the predetermined content to be stored on the database.

In a further aspect of the invention, an apparatus for tracking content in a user data signal, in particular an audio and/or video data signal, is presented, wherein the apparatus comprises one or more processors for performing the functions of a) providing a user data signal, wherein the user data signal is defined by an evolution of a spectrum with time over a plurality of time frames representing content, on particular a visual and/or audio content, to be presented to a user, b) determining a presence or absence of a predetermined content in the user data signal in a time frame of the plurality of time frames based on a watermark associated with the predetermined content embedded in the user data signal and/or based on determining one or more characteristics of the predetermined content associated with a footprint of the predetermined content in the user data signal, c) storing a detected presence of the predetermined content in the userdata signal in a time frame on a database in association with an identification of the predetermined content, and d) tracking the predetermined content in the user data signal based on the database.

In a further aspect of the invention, a user device for determining a presents of content for tracking content in a user data signal, in particular an audio and/or video data signal, is presented, wherein the user device comprises one or more processors for performing the functions a) receiving a user data signal, wherein the user data signal is defined by an evolution of a spectrum with time over a plurality of time frames representing content, on particular a visual and/or audio content, to be presented to a user, b) determining a presence or absence of a predetermined content in the user data signal in a time frame of the plurality of time frames based on a watermark associated with the predetermine content embedded in the user data signal and/or based on determining one or more characteristics of the predetermined content associated with a footprint of the data content in the user data signal, and c) sending the detected presence of the predetermined content in the user data signal to a database in association with an identification of the predetermined content to be stored on the database.

In a further aspect of the invention, a computer program product for tracking content in a userdata signal is presented, wherein the computer program product is configured to cause a apparatus as described above to perform the method as described above.

In a further aspect of the invention, a computer program product for determining a presents of content for tracking content in a user data signal is presented, wherein the computer program product is configured to cause a server as described above to perform the method as described above.

In a further aspect of the invention, a database generated utilizing a method as described above and/or the apparatus as described above is presented. Generally, in this context the storing of the detected presence of the predetermined content in the user data signal in association with an identification of the predetermined content on the database, is regarded as a generating to the database.

The methods as described above, the apparatuses as described above, and the computer program products as described above have similar and/or identical preferred embodiments, in particular, as defined in the dependent claims.

It shall be understood that a preferred embodiment of the present invention can also be any combination of the dependent claims with the respective independent claim.

These and other aspects of the invention will be apparent from and elucidated with reference to the embodiments described hereinafter.

### BRIEF DESCRIPTION OF THE DRAWINGS

- Fig. 1: shows schematically and exemplarily an embodiment of an apparatus for tracking content in a user data signal, and
- Fig. 2: shows schematically and exemplarily a flowchart of a computer implemented method for tracking content in a user data signal.

### DETAILED DESCRIPTION OF EMBODIMENTS

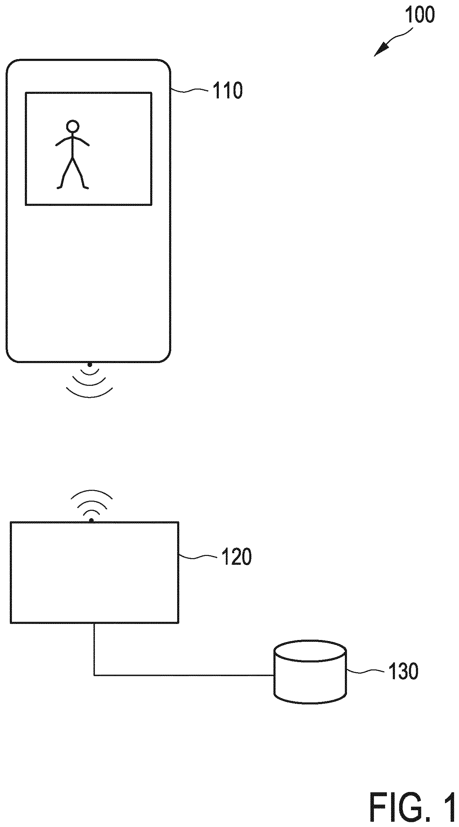

Fig. 1 shows schematically and exemplarily an apparatus 100 for tracking content in a user data signal. The apparatus 100 comprises one or more processors for performing respective functions of a method for tracking content in a user data signal. In this example shown in Fig. 1, the one or more processors are distributed over different locally distinct computing devices. In particular, in this embodiment, the apparatus comprises a user device 110, and a database managing system 120 communicatively coupled to a storage 130. The user device 110 is generally configured for receiving a user data signal representing a content to be presented to the user. The user data signal can be received from any known provider of a user data signal comprising respective content and can be distributed through a communicative coupling of the user device with the content provider. For example, the user device 110 can be part of a wired or wireless network over which a respective user data signal representing a content, for instance, a music piece, can be provided. The user device is then configured to presenting the content to a user based on the user data signal, for example, as shown in Fig. 1 by displaying video content on a respective display of the user device or by playing an audio content utilizing respective loudspeakers of the user device. Generally, the user device can refer to any device, in particular, to a portable user device like a smartphone, a laptop, a tablet, etc. However, the user device can also refer to a general computation device like a PC or computational terminal, or can refer to a TV device or radio comprising or being coupled to respective computational resources. Based on the received user data signal, the user device 110 is then configured to determine a presence or absence of a predetermined content in the user data signal in a time frame of the plurality of time frames of the user data signal based on a watermark associated with the predetermined content embedded in the user data signal and/or based on determining one or more characteristics of the predetermined content associated with the footprint of the data content in the user data signal. Preferably, the user device 110 in a first step decodes the user data signal utilizing known and predetermined decoding methods for determining whether a watermark is present in a respective time frame of the user data signal. Generally, a watermark can represent a plurality of information with respect to the predetermined content. In particular, the watermark at least allows for a unique identification of the predetermined content, for instance, utilizing a respective identification code. However, the watermark can also comprise additional information like information with respect to a creator or owner of the rights of the predetermined content or information that can be provided to a user, like, for instance, a title, etc. Moreover, the watermark can also comprise information to identify, for example, a database on which the predetermined content, for instance, associated with the ID of the predetermined content, is already provided for a tracking of the predetermined content and, for instance, additional information how to access this database. The user device 110 is then preferably adapted for providing the detected presence of the predetermined content, for instance, in form of an ID, to the database management unit 120, for instance, taking into account respective information stored on the watermark, for instance, indicating the respective database to which the presence of the predetermined content should be provided. However, also without the additional information provided by the watermark with respect to the database, the user device 110 can provide the presence of the predetermined content, for example, to a generally known database on which for a specific user device 110 the presence of a predetermined content should be stored.

Additionally or alternatively, the presence or absence of the predetermined content can also be determined based on one or more characteristics of the predetermined content associated with the footprint of the predetermined content in the user data signal. In particular, it is preferred that if in the user data signal no watermark can be decoded, the user device 110 is configured to determine a footprint of the content of the user data signal. Generally, a footprint of the content of the user data signal can refer to a combination of characteristics of the content of the user data signal that allow for a unique identification of the predetermined content. However, in some cases, in order to determine the presence of a predetermined content, it might be necessary to determine the footprint of more than one time frame. The respective footprint can comprise characteristics like frequency distributions, maxima und minima values of signals in one or more frequencies, spectral patterns of the respective user signal, and/or any measure that can be derived from respective characteristics of the user data signal. In a preferred embodiment, the footprint is determined such that it cannot be easily manipulated, at least not in a way that would not disturb the perception of the user of the content. An example for such a footprint is provided, for instance, in the patent EP 1 684 263 A1 incorporated herein by reference and preferably utilized for determining the footprint of the user data signal. The such determined footprint of one or more time frames of the user data signal can then be either compared by the user device 110 to a plurality of known footprints of predetermined content in order to identify the respective content present in the user data signal or can be provided, for instance, to the database management unit 120. In this case, the database management unit 120 can utilize in a preferred example the one or more databases utilized also for tracking of the content to compare the provided footprint with footprints stored on these databases for identification purposes. In this case, it can be regarded that the providing of the footprint by the user device 110 to the database management unit 120 refers to determining the presence or absence of predetermined content in the user data signal. However, it can also be regarded that at least a part of the step of determining the presence or absence of the predetermined content is then performed by the database management unit 120. For example, the database management unit can then compare the footprint received by the user device 110 to the footprints stored on the database on the storage 130 and if in the database a stored footprint is found that meets the footprint provided by the user device 110 within predetermined limits, the database management unit 120 can be configured to determine that the respective predetermined content to which the stored footprint refers is present in the user data signal. However, if the footprint is not found as part of the stored footprints, the database management unit 120 can be configured to either determine that none of the predetermined data content is present in the user data signal, or to access further databases for searching for the footprint or to allow for storing, for instance, in form of a registering, the not found footprint as a new entry in the database stored on storage 130. For example, the new entry can then be provided with an ID and the presence and absence of the new content can then also be tracked based on the new entry in the database.

Generally, if a presence of a predetermined content in a user data signal is determined, the database management unit 120 can be configured for accessing the storage 130 and storing the presence or at least an indication of the presence as part of a respective database in association with a respective identifier of the predetermined content. For example, if it is determined that a specific piece of music has been presented to the user as part of the user data signal, the database management unit 120 can be configured to increase a counter in the database associated with the respective piece of music in order to enumerate the number of presentations of the piece of music to a user. However, also additional information can be stored on the respective database relating, for instance, to rights with respect to the predetermined content, when and where the respective predetermined content has been presented, the duration of the presentation of the predetermined content, a provider of the presentation of the predetermined content, etc. Generally, one database can be provided for each different predetermined content or a plurality of predetermined contents can be provided as part of the same database. The database can generally be secured utilizing known security methods for preventing a manipulation of the database by non-authorized parties, in particular, to prevent a malicious manipulation of the content of a respective database. Preferably, the database is thus a sequential distributed database, even more preferably a blockchain database, for instance, provided in form of a smart contract. This has the advantage that the content of the database can only be manipulated by respective authorized parties and cannot be changed, for example, in an attempt to corrupt the tracking of the content of the database. Based on the respectively generated or amended database, the predetermined content can be tracked, for instance, by determining an amount of the presentations of the content to a user, by tracking when, where and by whom the content has been presented to a user, etc.

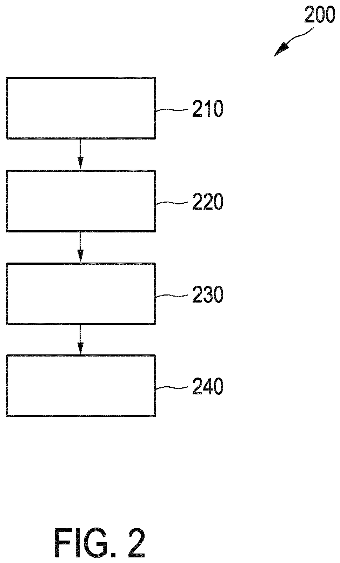

Fig. 2 shows schematically and exemplarily a computer implemented method for tracking content in a user data signal. Generally, the method 200 can be performed in accordance with the principles described above with respect to Fig. 1. In a first step 210, the method comprises providing a user data signal representing a content, in particular, a visual and/or audio content, to be presented to a user. In a step 220, a presence or absence of the predetermined content is determined in the user data signal in a time frame of the plurality of time frames based on a watermark associated with the predetermined content embedded in the user data signal and/or based on determining one or more characteristics of the predetermined content associated with the footprint of the predetermined content in the user data signal. Further, a determined presence of the predetermined content is stored in step 230 on a database, preferably, a blockchain database, in association with an identification of the predetermined content. Further, in step 240, the predetermined content is tracked in the user data signal based on the database.

In the following, some further detailed preferred embodiments will be described. Generally, it is preferred that for predetermined content a respective database on which the content can be tracked is generated, for instance, before the tracking of the predetermined content. For example, for a predetermined content, in particular, a piece of music, an identification code, i.e. an ID, that uniquely identifies the respective predetermined content can be generated. All further information stored on the database with respect to this predetermined content can be associated with this unique identification code. In one embodiment, for a predetermined content a respective footprint can be generated. Preferably, the footprint is generated for a plurality of time frames of the predetermined content, for example, referring to sequences of a piece of music of a 30 second length, that can be subsequent but can also be overlapping. These determined footprints can then, for example, be stored in association with the respective identification code of the predetermined content on the database. Moreover, additional information can also be generated and stored in association with the identification code of the predetermined content referring, for instance, to a composer, an interpreter, an owner, an abstract of the content, etc. However, since determining the identity of a content based on a footprint can be time-consuming, for instance, in large databases in which the respective footprint has to be compared to a plurality of stored footprints, it is preferred to utilize a watermark method. In particular, in this case the database is generated, for instance, also by generating a unique identification code for a predetermined content, for instance, a piece of music, but in this case storing further footprint data is optional. Based on the unique identification code of the predetermined content, a watermark data sequence indicative of the unique identification code can be embedded in the predetermined content. A decoding of the watermark data sequence then directly allows an identification of the predetermined content, in particular, based on the identification code. Moreover, the watermark data sequence can also be utilized to store further information, for instance, the information of a storage location of the database on which the predetermined content is tracked, or any of the information mentioned above, like a composer, interpreter, owner, etc, can also be stored with the watermark data sequence in the user content. Preferably, a watermark method is utilized that does not provide perceivable changes to the content of the user signal when the watermark is embedded. Moreover, it is preferred that a method is utilized that cannot be maliciously manipulated, for example, by changing or amending the watermark embedded in the user data signal without also changing the content of the user data signal perceivably. In particular, it is preferred to utilize a watermark data sequence embedded in accordance with the method described in the patent EP 1 684 265 A1 incorporated herein by reference and providing the above-mentioned advantages. Utilizing a watermark method for marking a respective predetermined content is in particular suitable if, for example, a creator of a predetermined content like an interpreter or a composer, has the possibility to directly embed the watermark into the predetermined content before distributing the predetermined content to a user. Thus, together with the embedding of the watermark it is preferred that directly a database forthe respective predetermined content is generated or the respective predetermined content is registered, i.e. stored, in an already existing database. Preferably, the database refers to a blockchain database, in particular, provided in form of a smart contract. Thus, generating the database for a predetermined content or integrating the entry of the predetermined content into an already existing database provided in form of a blockchain, in particular, a smart contract, allows to clearly identify the origin and time of creation of the respective predetermined content. For example, a blockchain database allows to store together with the unique identification code of the predetermined content also further information uniquely identifying the origin of the predetermined content and providing it with the respective time stamp of creation allowing to determine very easily a first possible creation time of the respective predetermined content. Further, using a blockchain database for tracking the predetermined content, for instance, as described above with respect to Figs. 1 and 2, allows to track a user presentation of the predetermined content on a plurality of platforms substantially in real time. Moreover, the information with respect to the usage, i.e. the tracking of the predetermined content, can be provided in a transparent way without corrupting the security of the data, i.e. while at the same time preventing malicious manipulation of the data. Moreover, blockchain databases allow to utilize further methods that are based on the blockchain technology like the generation of non-fungible tokens or multi-signature transactions to secure data, for instance, owner rights on the predetermined content. Moreover, for the tracking of a predetermined content, also more than one database, in particular, more than one blockchain database, can be utilized if suitable. For example, if the predetermined content is provided as user data signal to a user by a predetermined number of distributors, a respective database for each distributor can be generated, in form, for instance, of a smart contract for each distributor, wherein in this case the determining of the presence of the predetermined content can further comprise determining and providing information on the distributor of the predetermined content such that the respective presentation of the predetermined content to the user by the respective distributor can be stored on the database associated with this distributor.

In a preferred embodiment, if a presence of a predetermined content, in particular, of a piece of music, in a user data signal is determined, a respective counter in the database, preferably, the blockchain database, is adapted accordingly, for example, with respect to a respective distributor. Moreover, if additionally footprints are determined and stored, respectively, on the database, it can be determined by comparing how many of the footprints of the respective predetermined content can be identified in the user data signal, how much or how long the respective predetermined content has been presented to the user. For example, if a user only consumes half of a piece of music or half of a movie and then finishes the consumption of the predetermined content, this can also be determined by counting the respective footprints for the respective time frames that can be identified in the user data signal. The information can then be stored accordingly on the database. Further, in a preferred embodiment, for counting the number of presentations of the predetermined content or for counting, for instance, the number of time frames presented to a user of a predetermined content, also generally known token technologies and token methods can be utilized as part of the blockchain database, in particular, the smart contract. In particular, non-fungible tokens can be utilized to associate tokens with parts of the data stored with respect to a predetermined content on the database. Utilizing respective token methods and also non-fungible tokens allows to further exchange and commercialize the tokens that can be securely documented utilizing the blockchain database, in particular, a public part of the blockchain database.

Other variations to the disclosed embodiments can be understood and effected by those skilled in the art in practicing the claimed invention, from a study of the drawings, the disclosure, and the appended claims.

For the process and method disclosed herein, the operations performed in the processes and methods may be implemented in different order. Furthermore, the outlined operations are only provided as examples, and some of the operations may be optional, combined into fewer steps and/or operations, supplemented with further operations, or expanded into additional operations without detracting from the essence of the disclosed embodiments.

In the claims, the word "comprising" does not exclude other elements or steps, and the indefinite article "a" or "an" does not exclude a plurality.

A single unit or device may fulfil the functions of several items recited in the claims. The mere fact that certain measures are recited in mutually different dependent claims does not indicate that a combination of these measures cannot be used to advantage.

Procedures and operations like the providing of the user data signal, the determining of the presence or absence of a predetermined content, the storing of the presence of a predetermined content, the tracking of the predetermined content, etc. performed by one or several units or devices can be performed by any other number of units or devices. These procedures can be implemented as program code means of a computer program and/or as dedicated hardware.

A computer program product may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention refers to a method for tracking content in a signal, in particular an audio and/or video signal. A user signal is provided, wherein the user signal is defined by an evolution of a spectrum with time over a plurality of time frames representing a content, in particular, a visual and/or audio content. A presence of a content in the user signal in a time frame is determined based on a watermark associated with the content embedded in the user data signal and/or based on determining one or more characteristics of the content associated with a footprint of the predetermined content in the user data signal. A determined presence of the content in the user data signal in a time frame is stored on a database in association with an identification of the content. The predetermined content is tracked in the user data signal based on the database.

## Claims

1. A computer implemented method for tracking content in a user data signal, in particular an audio and/or video data signal, wherein the method (200) comprises:
providing (210) a user data signal, wherein the user data signal is defined by an evolution of a spectrum with time over a plurality of time frames representing a content, in particular, a visual and/or audio content, to be presented to a user,
determining (220) a presence or absence of a predetermined content in the user data signal in a time frame of the plurality of time frames based on a watermark associated with the predetermined content embedded in the user data signal and/or based on determining one or more characteristics of the predetermined content associated with a footprint of the predetermined content in the user data signal,
storing (230) a determined presence of the predetermined content in the user data signal in a time frame on a database in association with an identification of the predetermined content, and
tracking (240) the predetermined content in the user data signal based on the database.

2. The method according to claim 1, wherein the database is a sequential distributed database.

3. The method according to claim 2, wherein the sequential distributed database further comprises at least one of the following characteristics append-only, immutable, tamper evident and tamper resistant.

4. The method according to any of claims 1 and 2, wherein the sequential distributed database is provided as part or in form of a blockchain database.

5. The method according to any of the preceding claims, wherein the tracking of the data content based on the database comprises deriving measures for the predetermined content indicative of the time duration of the presence of the data content in the user data signal and/or of how often the predetermined content is present in a user data signal from the database.

6. The method according to any of the preceding claims, wherein the watermark includes a sequence of first and second data states, wherein for embedding a first state of the watermark in the user data signal the ratio of a first spectral amplitude of the user data signal at a first embedding frequency to a second spectral amplitude of the user data signal at a second embedding frequency is established to be higher or equal to a first value of a threshold parameter, and for embedding the second state of the watermark in the user data signal the ratio of the second spectral amplitude of the user data signal at the second embedding frequency to the first spectral amplitude of the user data signal at a first imprinting frequency is established to be higher or equal to a second value of the threshold parameter.

7. A method according to any of the preceding claims, wherein determining characteristics of the data content associated with a footprint of the data content comprises determining as characteristics a footprint vector by a) utilizing frequency filters for processing a frequency spectrum of the user data signal in a time frame comprising a plurality of time sets, wherein each of the frequency filters is adapted to filter a predetermined frequency from the frequency spectrum of the user data signal in each time set, resulting in a set of frequencies, and b) selecting the frequencies with the highest amplitude for each of the time sets and calculating the footprint vector as representing the number of occurrences of different frequencies in the time frame.

8. A computer implemented method for determining a presents of content for tracking content in a user data signal, in particular an audio and/or video data signal, wherein the method comprises:
providing a user data signal, wherein the user data signal is defined by an evolution of a spectrum with time over a plurality of time frames representing content, on particular a visual and/or audio content, to be presented to a user,
determining a presence or absence of a predetermined content in the user data signal in a time frame of the plurality of time frames based on a watermark associated with the predetermine content embedded in the user data signal and/or based on determining one or more characteristics of the predetermined content associated with a footprint of the data content in the user data signal, and
sending the detected presence of the predetermined content in the user data signal to a database in association with an identification of the predetermined content to be stored on the database.

9. An apparatus for tracking content in a user data signal, in particular an audio and/or video data signal, wherein the apparatus (100) comprises one or more processors for performing the functions of:
providing a user data signal, wherein the user data signal is defined by an evolution of a spectrum with time over a plurality of time frames representing content, on particular a visual and/or audio content, to be presented to a user,
determining a presence or absence of a predetermined content in the user data signal in a time frame of the plurality of time frames based on a watermark associated with the predetermined content embedded in the user data signal and/or based on determining one or more characteristics of the predetermined content associated with a footprint of the predetermined content in the user data signal,
storing a detected presence of the predetermined content in the user data signal in a time frame on a database in association with an identification of the predetermined content, and
tracking the predetermined content in the user data signal based on the database.

10. A user device for determining a presents of content for tracking content in a user data signal, in particular an audio and/or video data signal, wherein the user device comprises one or more processors for performing the functions:
receiving a user data signal, wherein the user data signal is defined by an evolution of a spectrum with time over a plurality of time frames representing content, on particular a visual and/or audio content, to be presented to a user,
determining a presence or absence of a predetermined content in the user data signal in a time frame of the plurality of time frames based on a watermark associated with the predetermine content embedded in the user data signal and/or based on determining one or more characteristics of the predetermined content associated with a footprint of the data content in the user data signal, and
sending the detected presence of the predetermined content in the user data signal to a database in association with an identification of the predetermined content to be stored on the database.

11. A computer program product for tracking content in a user data signal, wherein the computer program product is configured to cause a apparatus according to claim 9 to perform the method according to any of claims 1 to 7.

12. A computer program product for determining a presents of content for tracking content in a user data signal, wherein the computer program product is configured to cause a server according to claim 10 to perform the method according to claim 8.

13. A database generated utilizing a method according to any of claims 1 to 7 and/or the apparatus according to claim 9.
